# EUROPEAN PATENT APPLICATION

(11) **EP 3 851 366 A1**
(43) Date of publication of application: **21.07.2021**
(21) Application number: 18933212.5
(22) Date of filing: 11.09.2018
(51) Int. Cl.: B63C 9/087, A41D 13/012, A41D 31/02, B63C 11/04

(54) **FABRIC FOR WETSUIT AND WETSUIT COMPRISING SAID FABRIC**

(71) Applicant: Nankaigosen Co., Ltd., Wakayama-shi, Wakayama 640-0113 (JP)
(72) Inventor: NAKASHIMA Norio, Wakayama-shi Wakayama 640-0113 (JP); UEDA Ietoshi, Kobe-shi Hyogo 651-1223 (JP)
(74) Representative: Beck Greener LLP
(86) International application number: PCT/JP2018/033606
(87) International publication number: WO 2020/053956

(57) **Abstract**

A fabric for wetsuits is provided, the fabric having heat retention, stretchability, and quick drying properties. The fabric for wetsuits is formed by bonding a cloth of a weft knitted fabric plait knitted from polypropylene multifilament threads and elastic threads onto one or both surfaces of a sponge sheet made of chloroprene foamed rubber. Furthermore, the elastic threads of this cloth are heat-fused polyurethane elastic fibers, and the elastic threads of the weft knitted fabric are heat fused to each other. Moreover, the elastic threads are heat fused to each other by heat setting at 100 to 140°C.

## Description

### Technical Field

The present invention relates to a wetsuit used during surfing, diving, water sports, and other water activities and underwater activities.

### Background Art

Types of wetsuit include a separate type and full-suit type in which the top and bottom are connected like a pair of overalls, depending on the application and season. Both of these are heat-retaining suits used during water activities and water activities, and they have a structure that allows water to enter the space between the body and the inside of the suit. When wearing a suit of an appropriate size, a small amount of water entering the gap becomes a thin layer heated by body heat, exhibiting a heat retention effect.

A wetsuit using chloroprene synthetic rubber foamed in the shape of a closed-pore sponge is known as an example of such. For example, rubber-only wetsuits in which the chloroprene synthetic rubber skin surface is exposed on the outer and inner surfaces have advantages in that they can easily ensure heat retention due to the heat insulation due to the closed pores inside the rubber and the thickness of about 3 to 7 mm, they dry quickly, and they are stretchable. However, it cannot be said that they are easy to put on and take off, because they are slippery and have high friction. In addition, they are susceptible to concentrated stress due to sharp objects. For example, they are easily torn due to scratches caused by nails and the like, causing problems in durability.

Therefore, wetsuits in which a nylon material was bonded to one or both of the outer surface and the inner surface of a chloroprene rubber foam sponge sheet material came about in the 1960s. Such wetsuits in which a nylon material is bonded are more durable and less likely to tear than when the foam rubber sheet is exposed. Since nylon fiber has high durability, wetsuits in which a nylon material is bonded to the surface layer are still the most typical and are widely used today.

Furthermore, a wetsuit including a rubber layer as an outer layer, a chemical fiber layer such as polyester or nylon as an intermediate layer, and a fluororesin fiber layer as an inner layer has been proposed (see, for example, Patent Literature 1).

This proposes an inner layer that aims for improvement at while wearing by improving the slipperiness of the inner layer that adheres to the body when it is put on and taken off. However, a water-absorbent nylon layer is present as a base layer under the surface layer, and once moisture has penetrated the nylon layer inside, it is still difficult to dry, and even avoiding getting wet is often not possible. Since it is unclear whether stretchability and the like can be obtained for a fluororesin fiber layer similarly to a nylon layer, it is insufficient and still has practical problems.

In addition, a sheet and wetsuit material having a configuration in which a nylon woven fabric is woven, using a nylon material, into one side of a polyester woven fabric that is woven in using polyester hollow thread with gaps is provided and a foam rubber having high water resistance and heat insulation, such as neoprene, is connected to the back side of this nylon woven fabric using a connection material, for example, a fabric/rubber connecting layer using an adhesive, a material that can be repeatedly bonded, or the like, is proposed (see, for example, Patent Literature 2).

In the proposal, polyester hollow threads are provided on the inner layer surface to improve the texture at the surface contacting the skin, but it is mainly used for hospital sheets and the like, and the specific characteristics as a wetsuit are unclear. Moreover, since the surface layer of the polyester is for texture, has many gaps, and is assumed to transmit to the nylon layer, the nylon woven fabric becomes wet. Also, the proposal is not sufficiently practical as a wetsuit since it is used in combination with nylon woven fabric and has poor stretchability.

### Prior Art Literature

### Patent Literature

Patent Literature 1: JP 2000-273707 A
Patent Literature 2: JP 2015-188745 A

### Summary of Invention

### Problem to Be Solved by Invention

Currently, wetsuits made by cutting and sewing a fabric in which a nylon material is bonded to one or both sides of a chloroprene rubber foam sponge sheet are the most typical. However, in a wetsuit in which a nylon material is bonded to an outer layer or an inner layer, the fibers themselves of the nylon threads absorb water and therefore contains moisture, so the surface becomes wet, heavy, and difficult to dry.

For example, in a water sport such as surfing, it may be put on and taken off several times a day. In such case, the wet wetsuit is dried every time, but since the nylon threads absorb water absorption, it tends to dry slowly. In such case, wetsuits having high adhesion become more adhesive due to wetness, and it may be a struggle to re-don the wetsuit in such a state by stretching it. Therefore, in addition to having favorable extensibility, it is required to be resistant to getting, or to be easy to dry even when it gets wet.

Furthermore, as a result of repeated use in a wet state or semi-dried state, microorganisms are more likely to grow in an environment that is wet for a long time, which causes an unpleasant odor when worn and is not hygienic. Also, when a wetsuit that has been taken off is dried outside, the suit is turned inside out to dry the inside first, so the nylon layer of the outer layer is dried later, and the drying tends to be slower.

In addition, since the wetsuit is expected to be used not only in fresh water but also in seawater, it is immersed in salt water for four to five hours, which is a large burden on the fabric. Therefore, when a nylon material is bonded, the surface of the nylon layer may be coated to impart water repellency. However, since it is exposed to seawater for a long time and is worn down by use, the water repellency tends to decrease, even if the nylon layer is coated. For example, a wetsuit for surfing is worn down repeatedly for about three months even if it is used frequently. However, the water repellency of the nylon surface layer gradually decreases during that time, and the nylon layer does not repel water and becomes wet immediately.

In addition, when fibers having low durability are used for the outermost surface of the outer layer so that the coating may not be retained, they are worn down or tear, so nylon must also be used inside the outer layer, but the wet state cannot be avoided. Furthermore, materials that are brushed for texture are only for the inner layer and are not suitable for the outer layer, and the material for the inner layer is often not suitable for application to the outer layer.

Also, when the wetsuit is kept on while wet, the heat of vaporization from the surface of the fabric cools the wetsuit, so the wearer more readily drops in body temperature. In particular, in surfing and the like where the upper body is spread out on the water while waiting for waves, when the nylon on the outer layer surface of the wetsuit dries slowly and remains wet, the sea breeze also blows, so the body becomes cold more easily. Such cold may have no small effect on performance. Since wearing a wetsuit is typically for keeping warm, it is not desirable for the body to get cold due to being wet.

Furthermore, when the outer layer surface of the wetsuit remains wet, the seawater on the wet outer surface of the wetsuit splashes due to the movement of the hands or upper body while surfing, which splashes the face, possibly interfering with competitions and the like. As described above, in water sports such as surfing, it is desirable that the outer layer surface of the wetsuit also dries readily.

In addition, since nylon fiber has a water absorption of about 8 to 9% of its own weight, when the wetsuit contains seawater, the suit itself becomes heavy and may easily sink. Since it contains water and becomes heavy, an extra load that leads to an increase in weight is not desirable in a competition such as surfing in which the arms and the like are often move to change posture.

Of course, nylon jerseys are still the most typical at present because nylon fibers have high stretchability in the vertical and horizontal directions as well as durability and strength and are easier to wear than chloroprene synthetic rubber alone. Thus, it is conceivable to select fibers that do not absorb water or that absorb less water instead of nylon, but such an alternative material is not practical enough as a fabric for wetsuits unless at least the same or higher stretchability is ensured. This is because not only must the wetsuit be put on and taken off, but surfing and the like involve large movements and posture changes, so stretchability that enables easier movements is required.

However, when the nylon material is simply replaced with polypropylene threads that do not absorb water, generally, the stretchability will be poor compared to nylon, so simply replacing the material does not provide sufficient extensibility, and practicality cannot be ensured. Furthermore, since polypropylene thread is inferior in heat resistance compared to nylon thread, it is difficult to process by applying heat. For example, it is necessary to innovate to ensure stability of shape and dimensional stability by heat setting processing, and furthermore to ensure stretchability itself. Therefore, practicality cannot be obtained unless a structure or the like for ensuring stretchability is found in consideration of the low heat resistance.

Thus, a problem to be solved by the present invention is to provide a wetsuit in which a material that replaces the nylon material in a wetsuit that uses a chloroprene foam rubber sponge sheet material in which the nylon material is bonded to the outer surface, which is currently the most typical, is bonded, and to provide a wetsuit fabric and a wetsuit using the fabric, the fabric having the same stretchability as when nylon material is bonded, excellent heat retention, high water repellency, quick drying properties, and resistance to microbial proliferation.

In addition, another object of the present invention is to provide a wetsuit fabric in which a material having stretchability and favorable drying properties, which is suitable for an outer layer that requires durability, is bonded to the outer layer surface.

Furthermore, the nylon alternative material is a suitable material for bonding prior to being bonded to the chloroprene foam rubber sponge sheet. That is, before bonding, when the fabric becomes wrinkled or shrunk, and the width of the finished fabric becomes narrow, proper bonding is not possible, and thus, another object of the present invention is to provide a fabric for wetsuits and a wetsuit bonded to a foam rubber sponge sheet using an alternative material suitable for bonding.

### Means for Solving Problem

The inventors have studied polypropylene fiber as an alternative material for nylon material because it has almost no water absorption. It is true that polypropylene fiber does not absorb water, so the strength does not change even when wet. However, polypropylene fibers alone do not provide sufficient stretchability, and nylon has a melting point of 210°C or higher and a softening point of 180°C or higher, whereas polypropylene has a softening point of 140 to 160°C and a melting point of about 165 to 175°C, and the heat resistance is low, so it is difficult to perform heat setting and the like thereon, and when it is processed into a stretchable material, it tends to wrinkle, and it is found that it is less suitable for bonding than nylon.

Therefore, as a result of further diligent research, the inventors have invented a wetsuit fabric by bonding a knit of weft knitted fabric (including round braiding) in which polypropylene multifilament threads and elastic threads such as stretchable spandex are plait knitted (hereinafter, also referred to as "bare jersey knit") to a chloroprene foam rubber sponge sheet to make a nylon alternative material and also invented a wetsuit using this fabric.

That is, the first means of the present invention for solving the above problems is a wetsuit fabric in which a weft knitted fabric in which polypropylene multifilament thread and elastic thread are plait knitted is bonded to either one side or both sides of a chloroprene foam rubber sponge sheet.

The second means is a cloth for wetsuits in which a weft knitted fabric in which polypropylene multifilament thread and elastic thread are plait knitted is bonded to at least the outer layer surface of a chloroprene foam rubber sponge sheet.

The third means is the fabric for wetsuits according to the first and second means, wherein the elastic threads are heat fused polyurethane elastic fibers, and the elastic threads of the weft knitted fabric are heat fused to each other.

The fourth means is the fabric for wetsuits according to any one of the first to third means, wherein the elastic threads are heat fused to each other by heat setting at 100 to 140°C. The temperature of the heat setting is preferably 100 to 130°C, more preferably 105 to 125°C.

The fifth means is the fabric for wetsuits according to any one of the first to fourth means, wherein the elastic threads are plait knitted while stretched to 1.5 to 2.3 times their original length. More preferably, it is plait knitted while stretched to 1.5 to 2.0 times the original length.

The sixth means is the fabric for wetsuits according to any one of the first to fifth means, wherein the polypropylene multifilament threads have a thickness of 20 to 56 dtex, and the number of filaments is 30 or less.

The seventh means is the fabric for wetsuits according to any one of the first to sixth means, wherein the polypropylene multifilament threads have a thickness of 20 to 56 dtex, and the thickness per filament is 1 dtex or more.

The eighth means is a wetsuit using the fabric for wetsuits according to any one of the first to seventh means.

### Effect of Invention

In the fabric for wetsuits of the present invention, polypropylene multifilament threads are used to obtain an outer layer portion having no water absorption, and thus the fabric has high water repellency and drains well, so it dries quickly. Therefore, the growth of various microorganisms is suppressed, and it is hygienic. In addition, since stretchability is ensured by plait knitting with the elastic threads, the stretchability is ensured to the same extent as when a nylon material is bonded.

Furthermore, since capillary between filaments is suppressed by reducing the number of filaments, it is possible to suppress the amount of water that is retained, in addition to water absorption, and it is possible to dry quickly.

Further, since the polypropylene multifilament thread arranged on the outer layer has high durability, it is not easily torn like a foam rubber sponge sheet, and it has sufficient durability.

In addition, since the heat fused polyurethane elastic fibers are heat fused to each other, the elastic threads plait knitted while stretched do not shrink too much, the dimensional stability of the knitted fabric before bonding is favorable, and it is unlikely to wrinkle, and it may be favorably bonded. Moreover, the heat fusing makes the knitted fabric less likely to fray, making it less likely to break.

By lowering the heat setting temperature, changes in the polypropylene multifilament threads due to heat are suppressed, so the texture of the fabric is not impaired, wrinkles are not formed, dimensional stability is favorable, and it may be favorably bonded to a foam rubber sponge sheet.

### Brief Description of Drawings

[FIG. 1] (a) is a cross-section of an embodiment of the present invention in which a bare jersey knit is arranged on both sides. (b) is a cross-section of an embodiment of the present invention in which a bare jersey knit is arranged on the outer layer surface.
[Fig. 2] is a schematic diagram of the state of organization of a plait knitted bare jersey knit.

### Embodiments of Invention

Embodiments of the present invention are described below with appropriate reference to tables and drawings.

It is desirable that a closed cell sponge-like foam sheet of chloroprene synthetic rubber has large elongation, tensile strength and tear strength and does not absorb water when used for the cloth for the wet sheet. For example, a typical formulation thereof is obtained by mixing, in mass%, 45% chloroprene (CR), 10% carbon black, 10% filler, a foaming agent 10%, 15% plasticizer, and a small amount of a vulcanization accelerator, a crosslinking agent, and the like. A sponge sheet made of foam rubber is obtained by performing in order steps of kneading such material, extrusion molding, primary vulcanizing, secondary vulcanizing, and slicing as necessary.

Then, after applying adhesive to one or both sides, a jersey material is placed on the surface thereof, a suit material is obtained by crimping and bonding using an upper roller or upper and lower rollers, and this can be cut into a desired shape and sewn to obtain a wetsuit fabric.

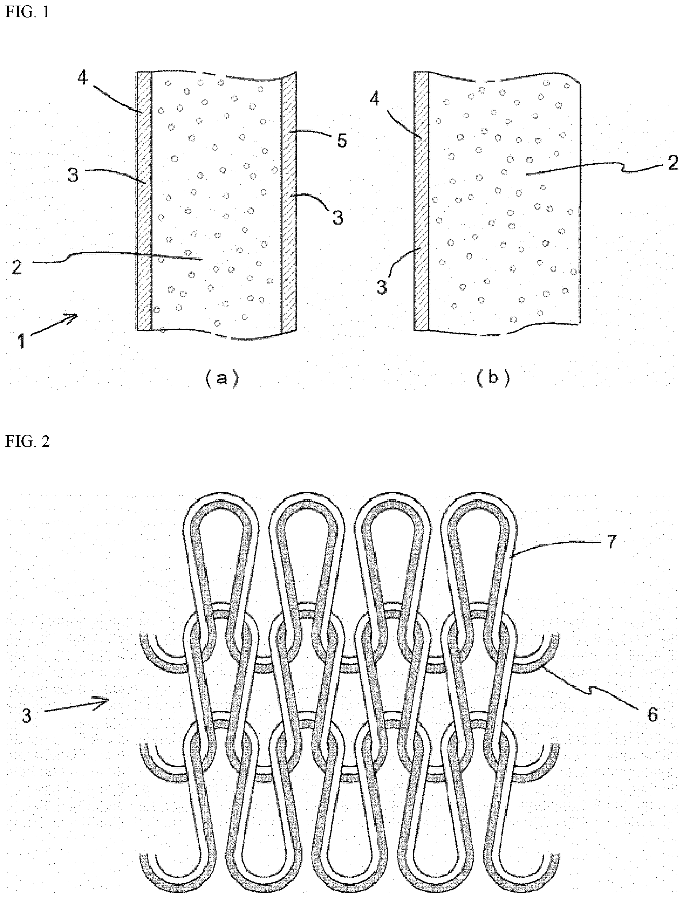

FIG. 1(a) is a cross-section illustrating a sponge sheet (2) made of chloroprene foam rubber arranged in a center and a bare jersey knit (3) composed of elastic threads and polypropylene multifilament threads bonded to respective surfaces of an outer layer surface (4) of a wetsuit and an inner layer surface (5) of the wetsuit. FIG. 1(b) is a cross-section illustrating the bare jersey knit (3) composed of elastic threads and polypropylene multifilament threads bonded to the outer layer surface (4), which is one surface of the sponge sheet (2) made of chloroprene foam rubber.

Polypropylene is the lightest synthetic fiber that is buoyant in water, having a 0.91 g/cm³ density, and it has high wear resistance. Since it does not absorb water, it can be expected to dry quickly when used in an outer layer of a wetsuit.

However, even when a fabric is obtained only using multifilament fibers of polypropylene and then bonded to a foam rubber sheet, the elasticity is insufficient, and thus, when it is made into a fabric as is, sufficient stretch to be worn while being elongated cannot be ensured like for a nylon material.

Therefore, in the present invention, polypropylene multifilament thread and elastic thread are plait knitted to further ensure stretchability while using polypropylene. That is, polypropylene is combined with an elastic thread such as a spandex to make a quick-drying, stretchable fabric having stretch similar to that of nylon.

Plait knitting is a knitting method of simultaneously knitting two strands separately in front and back, as illustrated in FIG. 2, and is also called braid knitting. As illustrated in FIG. 2, elastic threads (7) composed of heat fused polyurethane elastic fibers and polypropylene multifilament fibers (6) are interwoven over each other like plain knitting. Hereinafter, knits plait knitted together with elastic fibers are also called bare jersey knits.

Note, when the polypropylene multifilament fibers are arranged on the front side (front stitch), the polypropylene fibers, which have good durability, are exposed on the outer surface on the back side, and the strands of the elastic yarn are less readily broken.

For example, threads obtained by twisting 24 filaments into 33 dtex are preferable for polypropylene multifilament threads. When about 20 to 56 dtex, the multifilament threads are not too thick, and thus when appropriately selecting a similar 33 dtex or the like for the heat fused polyurethane elastic fiber elastic threads, it is possible to heat fuse elastic threads to each other by heat setting when plait knitting into a bare jersey knit, which is favorable. Polypropylene multifilament threads can ensure desired stretchability according to the manner of combination with the elastic threads. Also, when the number of the filaments is 30 or less, the number of the filaments is low, and thus a capillary action does not readily occur between filaments. It is possible to suppress the amount of water held between filaments, and thus it is desirable to not increase the number of filament threads too much.

Thus, since the 20 to 56 dtex, that is, 18 to 50 denier, multifilament threads are polypropylene fibers, the filament fibers themselves do not absorb water. However, since they are multifilaments, water is retained in gaps between the filaments by capillary action or the like. Therefore, it is also effective to reduce the number of filaments. Furthermore, as the thickness of the filament increases, small gaps become larger, the capillary force decreases, the surface area also decreases, and the amount of moisture absorbed can be reduced.

Also, the thickness per filament is preferably 1 dtex or more, more preferably 1.2 dtex or more. For example, for 24 filaments in 30 dtex, it is 1.25 dtex per filament, and for 40 filaments in 50 dtex, it is 1.25 dtex per filament. Furthermore, for 30 filaments in 56 dtex, it is 1.87 dtex per filament. By thus adjusting the thickness and number of filaments, the amount of water retention is reduced, the weight is not readily increased even when wet, and drying becomes faster.

Examples of heat fused polyurethane elastic fibers include Mobilon (registered trademark) R, R-L, K-L, and R-LL made by Nissinbo Textile, and the like. These thermally fused polyurethane elastic fibers are generally one type of fiber called spandex, and after these fibers are plait knitted, the elastic fibers are thermally fused to each other by, for example, applying a saturated vapor of 120°C to heat set the fibers.

Note, when the polypropylene and polyurethane elastic threads are formed into a bare jersey knit by plait knitting, the polypropylene cannot be said to be highly heat resistant, but it is preferable to heat set for dimensional stability because wrinkles readily occur. Generally, when performing heat set processing, when a high temperature such as 150°C to 200°C can be used, workability is better, and the effect of the heat set is adequately obtained. However, the heat resistance of the polypropylene of the present invention cannot be said to be favorable, For example, its texture is impaired even at about 140 to 160°C.

Also, in the present invention, among heat fused polyurethane elastic fibers, threads capable of heat fusing at low temperatures are particularly preferable as the elastic threads to be combined with the polypropylene multifilaments, and low temperature heat fused polyurethane elastic fibers that are heat-sealed using 130°C or lower saturated steam is preferable. For example, Mobilon R-L, K-L, R-LL, and the like are favorable examples of fibers capable of being softened and heat fused at 120°C or lower.

The heat setting method uses a heat setting processing machine and is performed by thermally fixing together with heat fusion by exposing a knitted fabric to saturated steam while inside of a template. The temperature of the saturated steam in such case is known to be related to the pressure of the supplied steam, and thus the saturated steam of the desired temperature can be obtained by, for example, adjusting the pressure of a boiler. When heat setting, when using, for example, 100 to 130°C saturated steam, particularly preferably 105 to 125°C saturated steam, a knitted fabric having a prescribed shape can be obtained by ensuring a desired knit width without impairing the texture and without wrinkling. The setting time of the heat set is 2 to 120 seconds, preferably 5 to 60 seconds. In the example, it was 20 seconds.

Of course, in addition to using saturated steam, heat set processing can be performed by applying heat such as 130°C or 140°C as dry heat in a range that does not sacrifice the texture.

When the heat set temperature was high at 150°C, wrinkles were conspicuous, and the texture was impaired. Meanwhile, in heat setting at 130°C or lower, wrinkles are not conspicuous, dimensional stability and shape stability are acceptable, and texture is not readily impaired. When the polypropylene multifilament thread is larger than 56 dtex, wrinkles are conspicuous, so it is most of all necessary to adjust the heat setting temperature and the temperature characteristics of the elastic thread.

The elastic thread is plait knitted in a state in which the yarn is elongated to 1.5 to 2.3 times the original length, but this is a smaller degree of elongation compared to normal method for stretching thread to 2.5 to 3.3 times the original length before knitting. It is more preferably elongated to 1.5 to 2.1 times the original length, further preferably 1.5 to 2.0 times the original length. The DR in the example is 1.75.

When the degree of the draft (DR) is kept low in this manner, the fabric before bonding does not readily wrinkle, and dimensional stability is easily obtained. Since polypropylene has low heat resistance, and the heat setting temperature cannot be raised, it is difficult to secure dimensional stability by heat setting processing, and thus by reducing the draft value in advance, the elastic thread is not pulled too strongly. Thus, because the fabric returns slowly when stretched a tight feeling is not readily imparted in terms of comfort, and thus it can be worn naturally without uncomfortable feelings.

### (Drying Properties)

Weight change after washing was observed for a full weight suit made using a wetsuit fabric made of a 2 mm thick sponge sheet made of foam rubber having a polypropylene bare jersey knit (P.P. jersey), which is an example product of the present invention, bonded thereto and for a full wetsuit made using a wetsuit fabric having nylon jersey bonded to a 2 mm thick sponge sheet made of foam rubber. The results are shown in Table 1.

**[Table 1]**

| Product Name | | PP Jersey | Nylon Jersey |
|---|---|---|---|
| Dry Weight (g) | | 978 | 978 |

| Time Passed | | PP Jersey | Nylon Jersey |
|---|---|---|---|
| After 30 minutes | Weight (g) | 1440 | 1764 |
| | % | 147% | 181% |
| | Weight increase (g) | 462 | 792 |
| After 60 minutes (1 hour) | Weight (g) | 1380 | 1692 |
| | % | 141% | 174% |
| | Weight decrease (g) | 60 | 72 |
| After 120 minutes (2 hours) | Weight (g) | 1308 | 1608 |
| | % | 134% | 165% |
| | Weight decrease (g) | 72 | 84 |
| After 180 minutes (3 hours) | Weight (g) | 1272 | 1536 |
| | % | 130% | 158% |
| | Weight decrease (g) | 36 | 72 |
| After 300 minutes (5 hours) | Weight (g) | 1200 | 1428 |
| | % | 123% | 147% |
| | Weight decrease (g) | 72 | 108 |

Although dry weights are substantially the same, the weight increase 30 minutes after washing with water was 462 g for the P. P. jersey, whereas the difference in weight increase due to the water absorption of nylon was marked, the nylon jersey in the comparative example having a 792 g increase. This value can be said to be the weight when wet during use. In this state, the lightness of the wetsuit is very different, and thus for the wearer, the 300 g difference in weight is a big difference from the viewpoint of ease of exercise.

After drying for 5 hours, the weight of the nylon jersey was finally about the weight just after wetting the P.P. jersey. Meanwhile, as the P.P. jersey had dried to 1200 g, and the moisture was less than half of that of the nylon jersey, it is obvious that the P.P. jersey wetsuit dries more readily.

Note, the P. P. jersey in the example took 1185 minutes (about 20 hours) to reach a completely dry state. On the other hand, for the nylon jersey, it had not dried even after the passage of 24 hours, and thus if it is used continuously every day, it was confirmed that it must remain wet, which hinders use.

### (Water Absorption)

The water absorption rate in the example is 15%, the water absorption rate of the nylon jersey in the comparative example is 28%, and it was confirmed that the P. P. jersey absorbs comparatively less water.

### (Antimicrobial Properties)

As shown in Table 2, antimicrobial properties are confirmed for the P. P. jersey, which is an example product the present invention, and a W/N jersey (wooly nylon) in a comparative example. The P. P. jersey is more antimicrobial than the nylon jersey.

Note that Table 1 is shown in logarithmic values, and thus 1.30 in the example means that a substantially minimal value has been reached. Also, the nylon jersey showed antimicrobial properties at 2.67 in comparison when new, but after 100 washes, the water repellent coating on the surface had been removed due to use, and thus the antimicrobial properties of the nylon jersey had deteriorated to 4.11. Thus, the antimicrobial properties of the nylon jersey deteriorate due to use. Because wetsuits are not always used in clean environments, for example, urinating while wearing the wetsuit, differences in antimicrobial properties are accompanied by long term differences in odor and the like, leading to differences in comfort.

**[Table 2]**

| Antimicrobial Properties (Test Results) | | | | |
|---|---|---|---|---|
| No. Material | | Common Log Value of Live Microbes (Difference of Max and Min) | | Antimicrobial Activity Value |
| | | Immediately after inoculation | 18 hours after cultivation | |
| (1) #NB2452 PP Jersey | Original | 4.49 (0.0) | 1.30 (0.0) | 5.7 |
| (2) #1258S0 W/N Jersey | Original | 4.53 (0.1) | 2.67 (1.8) | 4.3 |
| Control Material / Standard Cloth (100% cotton, white cloth) | | 4.58 (0.0) | 6.96 (0.0) | Proliferation value F: 2.4 |

| | | | | |
|---|---|---|---|---|
| Note: Used test microbe suspension having surfactant (Tween80) added thereto. Test method: JISL1902: 2015, Microbe Liquid Drawing Method Test inoculation: *Staphylococcus aureus, Staphylococcus aureus* NBRC12732 Cleaning method: Used selection method of SEK mark fiber products (general cleaning method) from (NPO) Japan Textile Evaluation Technology Council. | | | | |

### (Water Repellency)

Changes in water repellent performance were confirmed according to JISL1092 for the P. P. jersey in the example and the W/N jersey in the comparative example (wooly nylon jersey, water repellent coating applied to the surface) after a wear test.

The water repellency was evaluated at grades of 1 to 3 by a spray test in which water drops were sprayed on the fabric after 10, 50, 100 and 500 wear treatments (the test was conducted three times). Class 3 indicates that the water repellency is high, and class 1 means that there is not water repellency.
Class 1: The whole surface is wet.
Class 2: Half of the surface is wet, and small, individual wet portions penetrate the cloth.
Class 3: Small, individual wet portions in water droplet shapes are present on the surface

### For the wear treatment, a uniform wear treatment machine was used, and after spraying 0.1 mL of water on the surface to be worn, a pressing load of 4.45 N was applied, and the wear treatment was performed a predetermined number of times using a self-fabric. The results of 500 wear treatments are shown in Table 3, and the results of 10, 50, and 100 wear treatments are shown in Table 4.

For the nylon jersey, the water repellency was slightly inferior even after 10 wear treatments, and the water repellency was substantially gone after 100 water treatments. The results were similar for 500 times. The surface of the nylon jersey is coated with a water repellent coating, but it was confirmed that the nylon jersey more readily absorbs water and dries less readily since its water repellency is rapidly lost due to wear and deterioration.

Meanwhile, for the P.P. jersey of the present invention, water repellency stays class 3 even after 500 tests, and water repellency is maintained as initially.

**[Table 3]**

| Test Item | Test Result | | Test Method |
|---|---|---|---|
| | (1) #NB2452 PP Jersey | (2) #1258S0 W/N Jersey | |
| Water Repellency (Class) | 3, 3, 3 | 1, 1, 1 | JISL 1092 spray test |

| | | | |
|---|---|---|---|
| Wear treatment: Used uniform wear treatment machine After spraying 0.1 mL of water on surface to be worn, applied 4.45 N of pressing load, and wore self-fabric 500 times | | | |

**[Table 4]**

| Test Item | | Test Result | | Test Method |
|---|---|---|---|---|
| | | (1) #NB2452 PP Jersey | (2) #1258S0 W/N Jersey | |
| Water Repellency (Class) | After 10 wear treatments | 3, 3, 3 | 2,2,2 | JISL1092 spray test |
| | After 50 wear treatments | 3, 3, 3 | 2, 1, 1 | |
| | After 100 wear treatments | 3, 3, 3 | 1, 1, 1 | |

| | | | | |
|---|---|---|---|---|
| Wear treatment: Used uniform wear treatment machine After spraying 0.1 mL of water on surface to be worn, applied 4.45 N of pressing load, and wore self-fabric 500 times | | | | |

### (Heat Retention)

Retention of body temperature of the PP jersey wetsuit and the nylon jersey comparative product when used for surfing in sea water for about 50 minutes while wearing a wetsuit was examined.

The body surface temperature of the body just below the wetsuit, which had dropped to 26°C due to the seawater, rises to 32°C in about 4 minutes after returning to land. Thereafter, the example product held at 31.5°C, but the nylon jersey dropped to 30.5°C. Thus, the difference in the body surface temperature in the worn state is caused because the outer layer of the nylon jersey is wet, which is easily cooled by the heat of vaporization.

### (Elasticity)

For the polypropylene jersey of the example of the present invention, that formed by further knitting heat fused polyurethane elastic fiber elastic threads at an elongation of two times or less and heat fusing elastic threads to each other by heat setting can be stretched without requiring force during elongation.

For example, for a wetsuit fabric formed by bonding a bare jersey knit of 24 filaments of 33 dtex of heat fused polyurethane elastic fibers and 33 dtex of polypropylene multifilaments, the force required for 50% elongation was 0.8 N in the wale direction (longitudinal elongation) of the knitted fabric and 0.2 N in the course direction (horizontal elongation). (According to the JIS1096B method, a test piece with a width of 5 cm was measured for the force required for 50% elongation of its own length (elongation force at low elongation). Tensile speed: 20cm/min, clamp interval: 20cm.) It was very well elongated, and it has been confirmed that it can ensure stretch similar to nylon.

Furthermore, for a wetsuit fabric formed by bonding a bare jersey knit of 48 filaments of 56 dtex of polypropylene multifilaments, in a knitted fabric stretched to 2.9 times the original length, the wale direction stretched at 1.8 N, and the course direction stretched at 0.8 N.

### Description of Reference Numerals

1 Wetsuit fabric
2 Chloroprene foam rubber sponge sheet
3 Bare jersey knit
4 Outer layer surface
5 Inner layer surface
6 Polypropylene multifilament thread
7 Heat fused polyurethane elastic fiber

## Claims

1. A fabric for wetsuits, wherein a weft knitted fabric obtained by plait knitting polypropylene multifilament threads and elastic threads is bonded to either one side or both sides of a chloroprene foam rubber sponge sheet.

2. A fabric for wetsuits, wherein a weft knitted fabric obtained by plait knitting polypropylene multifilament threads and elastic threads is bonded at least on the surface of an outer layer of a chloroprene foam rubber sponge sheet.

3. The fabric for wetsuits according to claim 1 or 2, wherein the elastic threads are heat fused polyurethane elastic fibers, and the elastic threads of the weft knitted fabric are heat fused to each other.

4. The fabric for wetsuits according any one of claims 1 to 3, wherein the elastic threads are heat fused to each other by heat setting at 100 to 140°C.

5. The fabric for wetsuits according any one of claims 1 to 4, wherein the elastic threads are plait knitted while being stretched to 1.5 to 2.3 times their original length.

6. The fabric for wetsuits according any one of claims 1 to 5, wherein the polypropylene multifilament threads have a thickness of 20 to 56 dtex, and the number of filaments is 30 or less.

7. The fabric for wetsuits according any one of claims 1 to 6, wherein the polypropylene multifilament threads have a thickness of 20 to 56 dtex, and the thickness per filament is 1 dtex or more.

8. A wetsuit using the fabric for wetsuits according to any one of claims 1 to 7.
